# EUROPEAN PATENT SPECIFICATION

(11) **EP 3 939 877 B1**
(45) Date of publication and mention of the grant of the patent: **13.11.2024**
(21) Application number: 21185028.4
(22) Date of filing: 12.07.2021
(51) Int. Cl.: B63B 21/04, B63H 9/10, B66D 3/04, F16G 11/14

(54) **BLOCK WITH A TEXTILE AXLE**
BLOCK MIT EINER TEXTILACHSE
BLOC AVEC UN AXE TEXTILE

(30) Priority: 14.07.2020 IT 202000017041; 24.12.2020 IT 202000032429
(43) Date of publication of application: 19.01.2022
(73) Proprietor: Antal S.r.l., 35127 Padova Padova (IT)
(72) Inventor: CARRARO, Roberto, 35127 Padova (IT)
(74) Representative: Cantaluppi, Stefano

(56) References cited:
- EP-A1- 3 450 300
- EP-A2- 3 599 685
- FR-A1- 2 923 451

## Description

The present invention relates to a block having a textile axle, of the type comprising an annular pulley with a peripheral external groove for a line to be returned and a central passage for a second line which acts as the textile axle of the block, a partial closure element being associated with the pulley so as to cover an angular sector of the groove.

A block including such characteristics is known from httas://www.youtube.com/watch?v=dU 7dIc19e4.

This type of blocks is particularly advantageous when there are not required substantial or rapid sliding actions of the line to be returned, and therefore powerful rotations of the pulley are not needed, but instead advantages in terms of weight, spatial requirement and/or cost are appreciable. They are highly suitable for controlling these manoeuvres, in particular on sailboats which are subjected to high loads with reduced movements.

These blocks are based on the use (which is increasingly widespread) of so-called "low-friction rings", that is monolithic rings which are approximately toroidal and made from polished and anodized aluminium and in the outer circumferential surface of which there is formed an annular groove and at the centre of which there is provided a through-hole with a widened surface. Conventionally, these rings are used by using the groove for tying the ring and the through-hole for the line to be returned.

This solution for use is preferred because it ensures that the line to be returned, by passing through the central opening of the pulley, is not subjected to dangerous disengagements. It will be appreciated that any potential disengagement of the line to be returned compromises the operation of the pulley with damaging effects for the equipment and dangers for the safety of persons.

However, there are widespread uses in which the line to be returned is received in the groove and the central opening receives in turn the binding which therefore acts as a textile axle of the block.

It is evident that the low-friction rings are not found to be optimum for being used as pulleys in the blocks having a textile axle because they are subjected to the problem of disengagement if the line to be returned is passed into the circumferential groove. Various attempts have been made to solve this problem which, however, presents a number of difficulties, mainly as a result of the need to limit the number of components of the block in order to prevent the structural simplicity, reduced mass and limited cost for which they are greatly appreciated on the market from being compromised.

Examples of blocks which afford a specific capacity for retention of the line to be returned are described in WO2015001028 and US10322918.

In the example of WO2015001028, use is made of an additional element of the block which mainly acts as a spacer between the opposite ends of the line which forms the textile axle in order to prevent the friction and wear thereof on the external walls of the pulley.

The element which constitutes the spacer further provides a partial closure of the groove of the pulley.

In US10322918, use is made of a U-shaped structure which partially closes the groove of the pulley.

However, it is evident that both the spacer described in WO2015001028 and the U-shaped structure described in US10322918 have an effect on the spatial requirement, the weight, the cost and the complexity of the relevant blocks, thereby losing these characteristics of structural simplicity, low weight and cost which have had such an influence on the widespread distribution thereof.

Furthermore, when the above-mentioned blocks are under load under working conditions, the line which acts as a textile axle is subjected to traction so that it tends to compress the respective partial closure element of the groove against the external walls of the corresponding pulley with consequent friction between the external walls of the pulley and the corresponding internal faces of the partial closure element.

This disadvantage is aggravated by the fact that the partial closure element is typically manufactured from plastics material or wood, as described, for example, in WO2015001028, that is to say, materials which are not capable of opposing the compression applied by the line in the presence of high loads and far less of minimizing the sliding friction with the walls of the pulley.

The technical problem addressed by the present invention is to provide a block which is structurally and functionally configured to overcome at least some of the disadvantages set out with reference to the cited prior art.

This problem is solved by the invention by means of a block having a textile axle which is constructed according to claim 1.

According to the invention, the block comprises a pulley of the type without bearings with two opposing faces, between which at least one external peripheral groove is contained for a line to be returned and a central passage for a second line which acts as a textile axle of the block.

According to embodiments of the invention, the two opposing faces of the pulley can be internal faces which face the groove or can be external faces which are opposite the internal faces.

It may be noted that, in this context, the term "bearingless pulley" is preferably intended to be understood to be a ring with low friction having a unitary member which is substantially toroidal and which carries the external annular groove which is provided to receive the first line to be returned and the central passage which is provided to receive with direct contact the second line which acts as a textile axle.

A partial closure element is associated with the pulley so as to cover an angular sector of the groove.

Preferably, this closure element is partially inserted in the groove. In this manner, the total spatial requirement of the block is reduced and there is further a reduction in the possibility that the partial closure element can be compressed by the second line when the block is under load under working conditions. In fact, under such conditions, the insertion of the closure element into the groove allows the second line to discharge its tension directly on the external faces of the pulley rather than compressing and, consequently, deforming the partial closure element. Advantageously, the sliding between the pulley and second line therefore ensures less friction with respect to the sliding between the pulley and the closure element, also because the second line is constructed from a material with a low friction coefficient (for example, ultra-high-molecular-weight polyethylene of the type known under the mark DYNEEMA) with respect to the material of the pulley which is preferably less than the friction coefficient of the material of the closure element, still with respect to the material of the pulley.

For this purpose, it appears to be useful to define a first distance which separates in an axial direction the external faces of the flanks of the pulley and a second distance which separates in an axial direction the corresponding flanks of the partial closure element at least in a zone thereof facing the second line. Preferably, the first distance is greater than the second distance. This structure allows the second line to be kept spaced apart from the partial closure element or at least the contact surface to be minimized between the second line and the partial closure element so as to prevent the partial closure element from becoming compressed at the flanks of the pulley as a result of the tension of the second line when the block is under load.

Still in a preferable manner, the partial closure element is radially secured to the pulley but free to rotate with respect thereto. There is thereby obtained the main result of preventing the disengagement of the line from the groove.

On the pulley, along at least one flank of the peripheral groove adjacent to the corresponding face, there are constructed first coupling means and, on the closure element, at the same pulley flank, there are constructed second coupling means such that, when the first and second coupling means are coupled to each other, the closure element is radially secured to the groove but the pulley and closure element are free in terms of relative rotation. It is thereby possible for the partial closure element to prevent the disengagement of the line from the groove without further opposing the rotation of the pulley about the second line which acts as a textile axle.

It is further preferable for the first and second coupling means to be provided on both the juxtaposed flanks of the groove and on both the corresponding flanks of the partial closure element. This improves the radial retention function of the closure element as in the preceding point.

According to embodiments of the invention, the first coupling means can be provided on internal faces of the flanks facing the groove or can be provided on external faces of the flanks opposite the internal faces. Therefore, the partial closure element can be secured to the internal faces of the flanks of the pulley by means of respective first and second coupling means. Alternatively, the partial closure element can be secured to the external faces of the flanks of the pulley by means of respective first and second coupling means.

In one aspect, therefore, the invention relates to a block with a textile axle comprising a bearingless pulley with at least one external peripheral groove for a line to be returned and a central passage for a second line which acts as the textile axle of the block, a partial closure element being associated with the pulley so as to cover an angular sector of the groove, the external peripheral groove being between respective flanks of the pulley, on each of which there is defined a respective internal face which faces the groove and an external face which is opposite the internal face. Advantageously, the block comprises on at least one of the faces first coupling means and comprises on the partial closure element, in the region of the same face of the pulley, second coupling means such that, when the first and second coupling means are coupled to each other, the closure element is radially secured to the pulley but the pulley and closure element are free in terms of relative rotation.

Advantageously, the first and second coupling means allow the closure element to be secured without it occupying the central passage of the pulley which therefore still remains fully available for the second line, including in the case in which the partial closure element is secured to an external face of the pulley flanks.

In a preferred embodiment, the partial closure element has an intermediate constriction which delimits, at circumferentially opposite sides with respect to the constriction, a respective runner which is engaged with the pulley by means of a sliding connection between the first and second coupling means. In this manner, the constriction prevents the partial closure element from becoming compressed on the flanks of the pulley as a result of the tension applied by the second line when the block is under load.

In some embodiments, there is provision for the partial closure element to be further secured to the second line. In this manner, the closure element will remain retained in the circular sector of the groove of the pulley opposite the pulling direction of the pulley for improved retention of the line to be returned which is advantageous for preventing disengagement.

On the basis of an optional feature of the invention, the partial closure element is constructed in the form of a partial cap of the groove and can be inserted with a coupling which is ensured by the shape thereof between the juxtaposed flanks of the groove. In particular, the partial closure element can be removably insertable with a coupling which is ensured by the shape thereof between the juxtaposed flanks of the groove or the partial closure element can be insertable with a coupling which is ensured by the shape thereof between the juxtaposed flanks of the groove in a non-removable manner.

Advantageously, the partial closure element is insertable with a coupling which is ensured by the shape thereof between the juxtaposed flanks of the groove by means of resilient deformation of the partial closure element. In one aspect, the partial closure element is constructed from a resiliently deformable plastics material in order to allow the partial closure element to be inserted between the juxtaposed flanks of the groove with a coupling which is ensured by the shape thereof.

In some embodiments, the first coupling means comprise at least one lip and the second coupling means comprise at least one recess, in which the at least one lip is received when, for example, the partial closure element is inserted and retained between the flanks of the groove or in any case when the first and second coupling means are coupled to each other.

Preferably, the partial closure element extends over a sector of the pulley with an angle between 50° and 180° or over a percentage of the circular development of the groove between 15 and 50% (percentage preferably with reference to the entire pulley circumference). There is further provision for the partial closure element to be able to be secured to the second line, for example, by means of a binding or similar securing means.

In this case, the partial closure element may be provided with an extension piece which radially extends from the convex side and which is passed through by through-holes for a line with which to carry out the binding.

In particular, preferably, the partial closure element can be provided with an extrados projection through which through-holes extend for being tied to the second line.

Furthermore, it is disclosed a kit comprising a pulley without any bearings and a partial closure element, such as components of a block having a textile axle according to one or more of the features mentioned above.

In particular, the kit may comprise a pulley without any bearings and a partial closure element for the block having a textile axle according to one or more of the features mentioned above, the partial closure element being able to be associated with the pulley so as to cover an angular sector of the groove, the partial closure element being able to be at least partially inserted in the groove and able to be radially secured to the pulley but free to rotate with respect thereto.

The features and advantages of the invention will be better appreciated from the following detailed description of a preferred though non-limiting embodiment which is illustrated by way of non-limiting example with reference to the appended drawings, in which:
- Figure 1 is a perspective view of the block constructed according to the present invention;
- Figures 2 and 3 are a perspective view and a front view of the block according to an additional embodiment of the invention, respectively;
- Figures 4 and 5 are two different perspective views of the block according to an additional embodiment of the invention;
- Figure 6 is a side view of the block of Figures 4 and 5;
- Figure 7 is a front view of the block of Figures 4 and 5;
- Figure 8 is a cross-section along the line VIII-VIII of the block of Figure 7;
- Figure 9 is a cross-section along the line IX-IX of the block of Figure 8;
- Figure 10 is a cross-section along the line X-X of the block of Figure 8;
- Figure 11 is a perspective view of a second embodiment of the block of this invention;
- Figures 12 and 13 are a front elevation view and a cross-section along the line XIII-XIII of Figure 12 of the same block without any retention line, respectively.

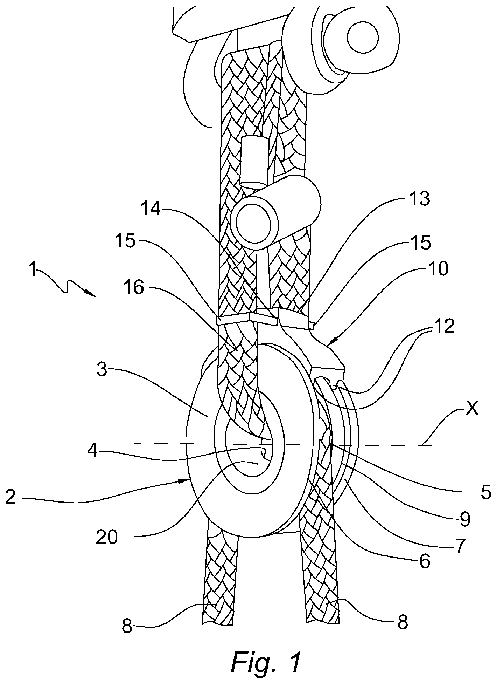

In the embodiments of Figures 1 to 10, there is generally designated 1 a block which is constructed according to the invention and which includes a pulley 2, having an axle X, of the type without rolling bearings. The pulley 2 is structurally monolithic and is constructed similarly to the pulleys known as "low-friction rings" which are widely used to return textile rigging on sailboats.

However, this does not limit the field of use of the present block which is suitable for multiple applications, including all those applications in which it is necessary to return lines and rigging with limited sliding by means of a block having a textile axle.

To this end, it is preferable for the surface of the pulley 2 to be smooth and non-deformable. Therefore, it is preferable for the pulley 2 to be constructed from metal material or composite material. In a preferred example, the pulley 2 is constructed from aluminium alloy, where applicable anodized with a thickness with an anodization layer with a low friction coefficient and high surface hardness.

The pulley 2 has a central axial opening 20.

There are identified on the pulley 2 two opposite faces 3, 4, between which there is an annular groove 5 (or a plurality of annular grooves), the flanks of which are designated 6 and 7, respectively. The faces 3, 4 are preferably connected by a continuous curvature to the central opening 20. The groove 5 is intended to receive a line 8 to be returned and has, near the end of the flanks 6, 7 distal from the pulley axis X, respective annular projections or recesses 9 which face each other with a specularly symmetrical arrangement and which project or are recessed inside the groove 5 towards each other. These projections or recesses 9 preferably constitute first coupling means, as will be better explained below.

A partial closure element 10 is applied to the pulley 2 so as to cover an angular sector of the groove 5. Preferably, the closure element 10 is partially inserted in the groove 5 and, still in a preferable manner, is radially secured to the pulley but is free to rotate with respect thereto and with respect to the axle X by sliding circumferentially along the groove 5.

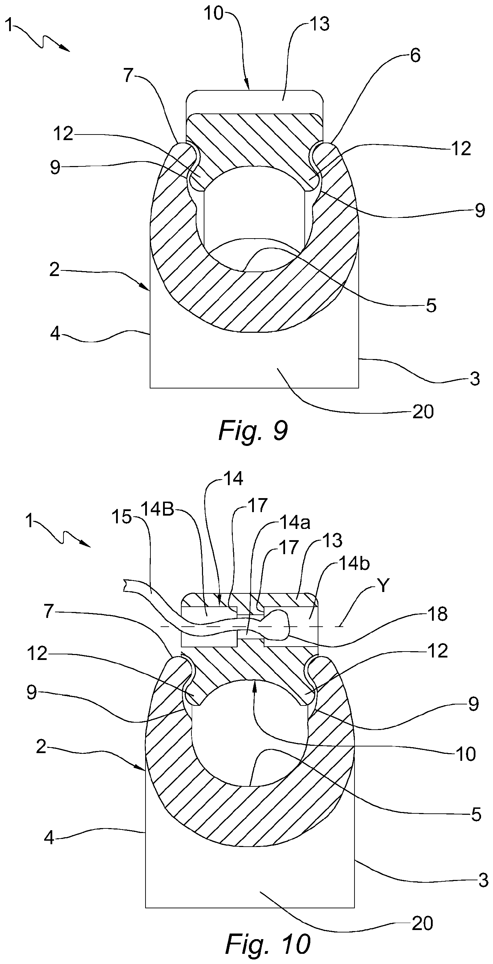

As set out in the examples of Figures 9 and 10, the partial closure element 10 is removably engaged in the groove 5 of the pulley by means of second coupling means 12 which engage in the first coupling means 9 in such a manner that, when the first and second coupling means 9 and 12 are coupled with each other, the closure element 10 is radially secured to the groove 5 but the pulley 2 and closure element 10 are free in terms of relative rotation.

Advantageously, the entire partial closure element 10 or at least the second coupling means 12 are constructed from a plastics material which, in some embodiments, is resiliently deformable in order to allow the partial closure element 10 to be inserted between the juxtaposed flanks of the groove 5 with mutual engagement between the first and second coupling means 9 and 12.

It will be understood that, preferably, when the first coupling means 9 are constructed in the form of projections, the second coupling means 12 will be constructed in a mating form, such as recesses, while, when the first coupling means 9 are constructed in the form of recesses, the second coupling means 12 will also be constructed in this case in a mating form, such as annular projections.

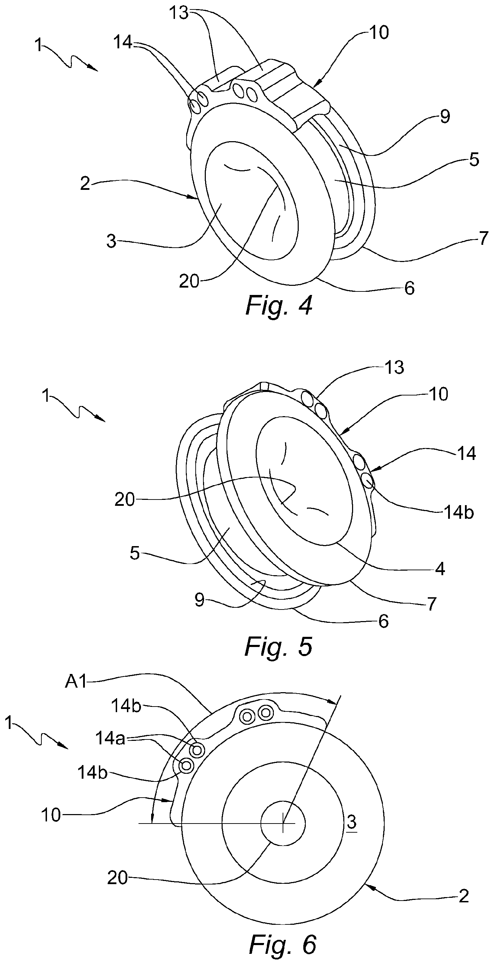

According to an embodiment, the partial closure element 10 has a circular-sector-like shape. As set out in the example of Figure 6, the partial closure element 10 extends over a sector of the pulley 2 with an angle A1 between 50° and 180°. Preferably, the angle A1 is between 80° and 100°. Even more preferably, the angle A1 is equal to approximately 90°.

In an aspect, the partial closure element 10 aims to close approximately 25% of the groove 5 and preferably has, in an intermediate zone thereof, an extrados projection 13 which projects radially towards the exterior of the groove 5, that is to say, from the convex side of the element 10, and through which there preferably extend two or more through-holes 14 in which there can be passed a line 15 which can be closed in an annular manner and which serves to secure, for example, by means of tying, the element 10 to a second line 16 which acts as a textile axle for the pulley 2.

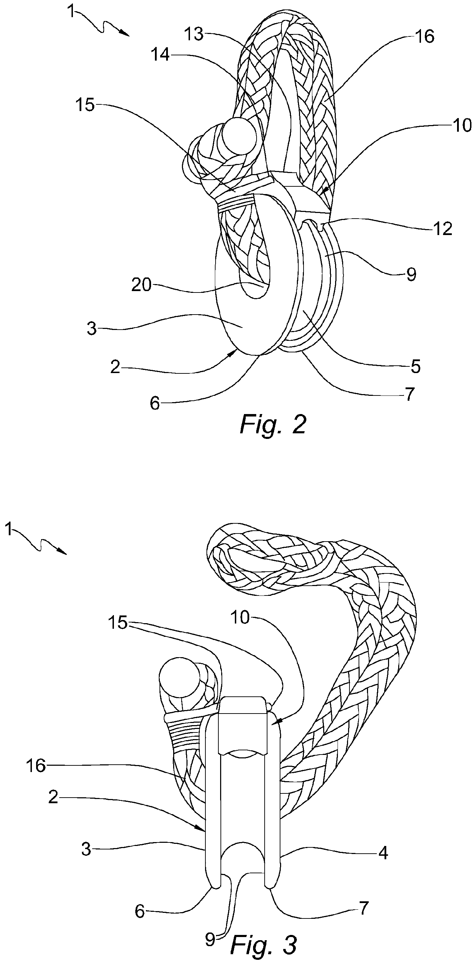

The second line 16 in the example illustrated in Figure 1 is constructed from a textile loop which is passed several times into the central opening 20 of the pulley 2 but which may be produced differently, for example, by means of a textile eyebolt, as illustrated in the examples of Figure 2 (eyebolt in a closed position) and Figure 3 (eyebolt in an open position) or by means of a binding or other simple line according to methods which are well known in the sailing sector.

Advantageously, the second line 16 is constructed from a material which is resistant to traction and abrasion, preferably a textile material, for example, of the synthetic type. According to another advantageous aspect, the material of the second line 16 is constructed from an ultra-high-molecular-weight polyethylene fibre which is known commercially under the marks "Dyneema^{®}" or "spectra^{®}".

Furthermore, the material of the second line 16 has a low friction coefficient, with particular reference to the sliding friction with respect to the material of the pulley 2. Furthermore, in some embodiments, the material of the second line 16 has a sliding friction coefficient with respect to the material of the pulley 2 which is less than the sliding friction coefficient of the material of the partial closure element 10 still with respect to the material of the pulley 2.

Therefore, it is preferable for, when the block 1 is under load under working conditions, the external faces 3, 4 of the pulley to slide in direct contact with the second line 16 rather than with the corresponding flanks of the partial closure element 10. In fact, the sliding between the pulley 2 and second line 16 provides less resistance with respect to the sliding between the pulley 2 and the partial closure element 10.

In order to minimize the sliding between the pulley 2 and the partial closure element 10, it is necessary to prevent the partial closure element 10 from being compressed at the flanks 6, 7 of the pulley due to the tension of the second line 16 when the block is under load. This result may be achieved with a partial closure element 10 which does not project beyond the external faces 3, 4 of the pulley at least in a facing zone between the partial closure element 10 and the second line 16.

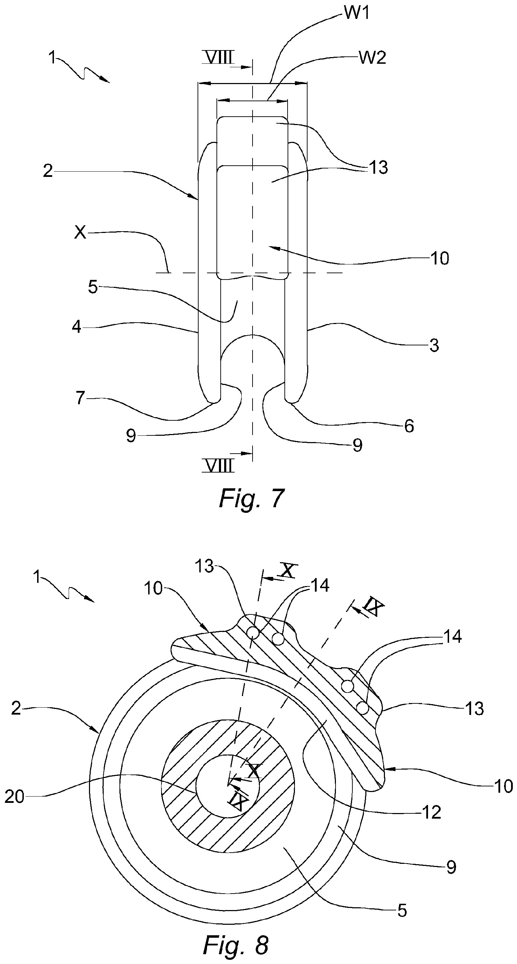

To this end, with reference to the example of Figure 7, it is possible to define a first distance W1 which separates in an axial direction the external faces 3, 4 of the flanks 6, 7 of the pulley 2, and a second distance W2 which separates in an axial direction the corresponding flanks of the partial closure element 10 at least in a zone thereof facing the second line 16. Advantageously, the first distance W1 is greater than the second distance W2 so as to prevent the partial closure element 10 from being compressed on the flanks 6, 7 of the pulley as a result of the tension of the second line 16 when the block is under load. In the embodiment shown in the examples of Figures 4 to 10, the partial closure element 10 has two extrados projections 13. Each of the two projections 13 is passed through by two through-holes 14. As shown in the example of Figure 10, the holes 14 develop along respective axes Y which are parallel with the axle X of the pulley 2. In one aspect, at least one of the holes 14 defines two lateral sections 14b which are axially opposite and a central section 14a which is interposed between and communicates with the two lateral sections 14b.

Advantageously, the aperture (or the diameter) of the central section 14a is less than the aperture (or diameter) of the lateral sections 14b. Preferably, there is provision for an abutment 17 between the central section 14a and each of the two lateral sections 14b. In this manner, the central section 14a allows the passage of the line 15 through the central section 14a and the adjacent lateral sections 14b but blocks the passage of a knot 18 of the line 15 (for example, a head knot) through the central section 14a and/or against the abutment 17. It will be appreciated that the blocking of the knot 18 inside the hole 14 allows the tying of the line 15 to be carried out between the element 10 and the second line 16 in a rapid and effective manner.

According to another advantageous aspect, the lateral sections 14b are configured to receive therein the knot 18 in a protected manner, to the benefit of the security of the binding and furthermore to the benefit of the compactness of the block 1. It is evident that, in some embodiments, there may be provided a single lateral section 14b rather than two.

It must be observed that, advantageously, the pulley 2 and the partial closure element 10 are both replaceable replacement elements of the block 1. In the event of damage to the pulley 2 or the partial closure element 10, it is possible to replace the corresponding replacement element without necessarily replacing the entire block 1.

In one aspect, the pulley 2 and the partial closure element 10 according to one or more of the characteristics mentioned above taken separately can constitute or form part of a kit for producing the block 1 according to the present invention. It will be understood that the partial closure element 10 has to be associable with the pulley 2 so as to cover an angular sector of the groove 5 and preferably the partial closure element 10 has to be at least partially insertable in the groove 5 and, still in a preferable manner, radially securable to the pulley 2 but free to rotate with respect thereto.

The block 1 and the kit for producing the block 1 thereby solve the technical problem proposed and achieve a number of advantages with respect to known blocks. These advantages include the particular lightness of the assembly, the high working load which can be supported, the minimal spatial requirement, the structural simplicity, the reliability and the safety.

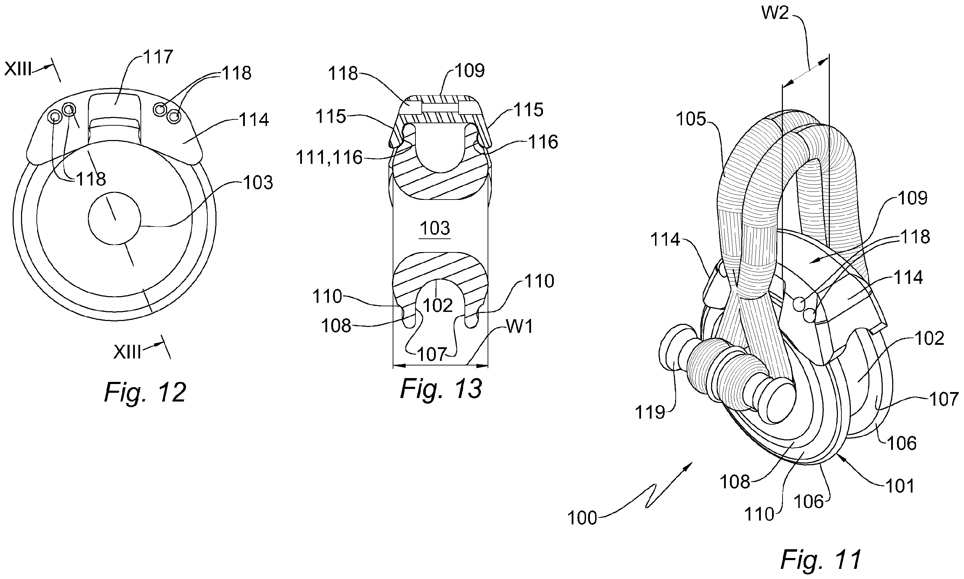

Figures 11 to 13 illustrate a second embodiment of a block having a textile axle according to the present invention. This block, which is generally designated 100, comprises a pulley 101 having a unitary or one-piece body which is substantially toroidal with an external peripheral groove 102 for a line to be returned and a central passage 103 for a second line which acts as the textile axle of the block. In case the second line does not require adjustments, it can be, for example, constructed by a loop 105 of Dyneema or another textile ring with a high level of resistance and low friction coefficient. In the case of a loop 105, it may be made to be openable by means of a toggle type fastener 119 or another equivalent arrangement.

The pulley 101 is of the type generally referred to in the sector using the term "low-friction ring" because it is typically constructed from a light anodized alloy which has a thickness with an anodization layer with a low friction coefficient and a high surface hardness.

The groove 102 is contained between two flanks 106 with a respective internal face 107 which faces the groove 102 and an opposite external face 108 which is preferably connected in a radial manner relative to the central passage 103 so as to precisely define the desired approximately toroidal shape.

A partial closure element 109 of the groove 102 is secured to the pulley 101 by way of respective first and second coupling means 110, 111. The element extends over a sector of the circumference of the pulley so as to partially cover the pulley in order to prevent the first line from being able to be disengaged from the groove 102. In a preferred embodiment, the first coupling means 110 are formed on the external face 108 of the two flanks 106 of the pulley, preferably in the form of a respective second annular groove which, in a preferred embodiment, develops circumferentially near the external peripheral edge of the corresponding pulley flank 101. The second coupling means 111 are preferably constructed by a respective runner 114 which extends so as to straddle the groove 102 and which has at juxtaposed flanks 115 a respective projection 116 which is counter-formed on the second annular groove and which is capable of engaging therewith in a snap-fitting manner. Advantageously, there is present between the two circumferentially opposite runners a constriction 117 which serves to prevent the partial closure element 109 from being compressed on the flanks 106 of the pulley as a result of the tension applied by the second line 105 when the system is under load. In fact, preferably, the flanks of the constriction 117 define a facing zone between the corresponding flanks of the partial closure element 109 and the second line 105. Therefore, it is preferable for a first distance W1 which separates in an axial direction the external faces 108 of the flanks 106 of the pulley 101 to be greater than a second distance W2 which separates, still in an axial direction, the corresponding flanks of the constriction 117 so as to minimize the contact surface between the second line 105 and the partial closure element 109 when the block is under load.

In some embodiments, through-holes 118 are provided for a binding which is not illustrated and with which the partial closure element can be tied to the second line so as not to rotate with respect thereto. It will be observed that the partial closure element 109, when the first and second coupling means are coupled to each other, is radially secured to the pulley but the pulley and closure element are free to rotate in relative terms.

Therefore, the pulley 101 is free to rotate on the textile axle which is defined by the second line and the first line is secured in the groove 102 so as to prevent the accidental disengagement thereof.

## Claims

1. A block (1; 100) having a textile axle comprising a bearingless pulley (2; 101) with two opposing faces (3, 4; 108), between which there is at least one external peripheral groove (5; 102) for a line (8) to be returned and a central passage (20; 103) for a second line (16; 105) which acts as the textile axle of the block (1; 100), a partial closure element (10; 109) being associated with the pulley (2; 101) so as to cover an angular sector of the groove (5; 102), **characterized in that** it comprises on the pulley (2; 101), along at least one flank (6, 7; 106) of the peripheral groove (5; 102) adjacent to the corresponding face (3, 4; 108), first coupling means (9; 110) and it comprises on the closure element (10; 109), at the same flank (6, 7; 106) of the pulley (2; 101), second coupling means (12; 111) such that, when the first and second coupling means (9, 12; 110, 111) are coupled to each other, the closure element (10; 109) is radially secured to the groove (5; 102) but the pulley (2; 101) and closure element (10; 109) are free in terms of relative rotation.

2. A block (1; 100) having a textile axle according to claim 1, wherein first and second coupling means (9, 12; 110, 111) are provided on both the juxtaposed flanks (6, 7; 106) of the groove (5; 102) and on both the corresponding flanks of the partial closure element (10; 109).

3. A block (1) having a textile axle according to claim 1 or 2, wherein the partial closure element (10) is at least partially inserted in the groove (5).

4. A block (1) having a textile axle according to claim 1, 2 or 3, wherein the partial closure element (10) can be removably inserted between the juxtaposed flanks of the groove (5) with a coupling which is ensured by the shape thereof, preferably wherein the partial closure element (10) can be inserted between the juxtaposed flanks of the groove (5) with a coupling which is ensured by the shape thereof by means of a resilient deformation of the partial closure element (10), even more preferably wherein the partial closure element (10) is constructed from a resiliently deformable plastics material in order to allow the partial closure element (10) to be inserted between the juxtaposed flanks of the groove (5) with a coupling which is ensured by the shape thereof.

5. A block (1; 100) having a textile axle according to one or more of the preceding claims, wherein the partial closure element (10; 109) extends over a sector of the pulley (2; 101) with an angle (A1) between 50° and 180° or over a percentage of the circular development of the groove (5; 102) between 15 and 50%.

6. A block (1; 100) having a textile axle according to one or more of the preceding claims, wherein the partial closure element (10; 109) is secured to the second line (16; 105), the partial closure element (10; 109) preferably being secured to the second line (16; 105) by being tied, the partial closure element (10; 109) even more preferably being provided with an extrados projection (13) through which through-holes (14; 118) extend for being tied to the second line (16; 105).

7. A block (100) having a textile axle according to one or more of the preceding claims, the external peripheral groove (102) being between respective flanks (106) of the pulley (101), on each of which there is defined a respective internal face (107) which faces the groove (102) and an external face (108) opposite the internal face (107), wherein the block (100) comprises, on at least one of the faces (107, 108), first coupling means (110) and it comprises on the partial closure element (109), at the same face of the pulley, second coupling means (111) such that, when the first and second coupling means (110, 111) are coupled to each other, the closure element (109) is radially secured to the pulley (101) but the pulley (101) and closure element (109) are free in terms of relative rotation, wherein the first coupling means (110) are formed on the internal face (107) of the flanks (106) of the pulley.

8. A block (100) having a textile axle according to one or more of claims 1 to 6, the external peripheral groove (102) being between respective flanks (106) of the pulley (101), on each of which there is defined a respective internal face (107) which faces the groove (102) and an external face (108) opposite the internal face (107), wherein the block comprises, on at least one of the faces (107, 108), first coupling means (110) and it comprises on the partial closure element (109), at the same face of the pulley, second coupling means (111) such that, when the first and second coupling means (110, 111) are coupled to each other, the closure element (109) is radially secured to the pulley (101) but the pulley (101) and closure element (109) are free in terms of relative rotation, wherein the first coupling means (110) are formed on the external face (108) of the flanks (106) of the pulley.

9. A block (100) having a textile axle according to claim 8, wherein the partial closure element (109) has an intermediate constriction (117) which delimits, at circumferentially opposite sides with respect to the constriction (117), a respective runner (114) which is engaged with the pulley (101) by means of a sliding connection between the first and second coupling means (110, 111).

10. A block (1; 100) having a textile axle according to one or more of the preceding claims, wherein the first coupling means (9; 110) are constructed in the form of recesses and the second coupling means (12; 111) are constructed in the form of projections which can engage with the recesses in a snap-fitting manner, or vice versa.

11. A block (1; 100) having a textile axle according to claim 10, wherein the recesses are constructed in the form of a second annular groove which develops circumferentially near an external peripheral edge of the corresponding flank (6, 7; 106) of the pulley (2; 101).

12. A block (1; 100) having a textile axle according to one or more of the preceding claims, wherein there are defined a first distance (W1) which separates in an axial direction the external faces (3, 4; 108) of the flanks (6, 7; 106) of the pulley (2; 101), and a second distance (W2) which separates in an axial direction the corresponding flanks of the partial closure element (10; 109) at least in a zone thereof facing the second line (16; 105), the first distance (W1) being greater than the second distance (W2) so as to prevent the partial closure element (10; 109) from becoming compressed at the flanks (6, 7; 106) of the pulley as a result of the tension of the second line (16; 105) when the block (1; 100) is under load.

13. A block (1; 100) having a textile axle according to claim 12, wherein the second line (15; 105) is constructed from a material with a friction coefficient with respect to a material of the pulley (2; 101) which is less than the friction coefficient of a material of the partial closure element (10; 109) with respect to the material of the pulley (2; 101).

14. A block (1; 100) having a textile axle according to claim 12 or 13, wherein the pulley (2; 101) is constructed from metal material or composite material, the second line (15; 105) is constructed from textile material and the partial closure element (10; 109) is constructed from plastics material.

## Patentansprüche

1. Block (1; 100) mit einer Textilachse, der eine lagerlose Umlenkrolle (2; 101) mit zwei gegenüberliegenden Flächen (3, 4; 108) umfasst, zwischen denen zumindest eine äußere Umfangsnut (5; 102) für eine zurückzuführende Leine (8) und ein mittiger Durchgang (20; 103) für eine zweite Leine (16; 105) vorhanden sind, die als Textilachse des Blocks (1; 100) fungiert, wobei ein Teilverschlusselement (10; 109) mit der Umlenkrolle (2; 101) verbunden ist, um einen Winkelsektor der Nut (5; 102) abzudecken, **dadurch gekennzeichnet, dass** dieser auf der Umlenkrolle (2; 101) entlang zumindest einer Flanke (6, 7; 106) der Umfangsnut (5; 102), die an die entsprechende Fläche (3, 4; 108) angrenzt, eine erste Verbindungseinrichtung (9; 110) umfasst und auf dem Verschlusselement (10; 109) an der gleichen Flanke (6, 7; 106) der Umlenkrolle (2; 101) eine zweite Verbindungseinrichtung (12; 111) aufweist, sodass wenn die ersten und zweiten Verbindungseinrichtungen (9, 12; 110, 111) miteinander verbunden sind, das Verschlusselement (10; 109) radial an der Nut (5; 102) befestigt ist, die Umlenkrolle (2; 101) und das Verschlusselement (10; 109) jedoch frei gegeneinander drehbar sind.

2. Block (1; 100) mit einer Textilachse nach Anspruch 1, wobei die ersten und zweiten Verbindungseinrichtungen (9, 12; 110, 111) an beiden nebeneinander liegenden Flanken (6, 7; 106) der Nut (5; 102) und an beiden entsprechenden Flanken des Teilverschlusselements (10; 109) vorgesehen sind.

3. Block (1) mit einer Textilachse nach Anspruch 1 oder 2, wobei das Teilverschlusselement (10) zumindest teilweise in die Nut (5) eingesetzt ist.

4. Block (1) mit einer Textilachse nach Anspruch 1, 2 oder 3, wobei das Teilverschlusselement (10) mit einer durch dessen Form gewährleisteten Verbindung zwischen die aneinandergrenzenden Flanken der Nut (5) lösbar einsetzbar ist, wobei das Teilverschlusselement (10) vorzugsweise mittels einer elastischen Verformung des Teilverschlusselements (10) mit einer durch dessen Form gewährleisteten Verbindung zwischen die aneinandergrenzenden Flanken der Nut (5) einsetzbar ist, wobei das Teilverschlusselement (10) noch bevorzugter aus elastisch verformbarem Kunststoffmaterial hergestellt ist, um ein Einsetzen des Teilverschlusselements (10) mit einer durch dessen Form gewährleisteten Verbindung zwischen die aneinandergrenzenden Flanken der Nut (5) zu ermöglichen.

5. Block (1; 100) mit einer Textilachse nach einem oder mehreren der vorhergehenden Ansprüche, wobei sich das Teilverschlusselement (10; 109) über einen Sektor der Umlenkrolle (2; 101) mit einem Winkel (A1) zwischen 50° und 180° oder über einen Prozentsatz der kreisförmigen Abwicklung der Nut (5; 102) zwischen 15 und 50% erstreckt.

6. Block (1; 100) mit einer Textilachse nach einem oder mehreren der vorhergehenden Ansprüche, wobei das Teilverschlusselement (10; 109) an der zweiten Leine (16; 105) befestigt ist, das Teilverschlusselement (10; 109) vorzugsweise durch Festbinden an der zweiten Leine (16; 105) befestigt ist, und das Teilverschlusselement (10; 109) noch bevorzugter mit einem bogenförmigen Vorsprung (13) versehen ist, durch den sich Durchgangsöffnungen (14; 118) zum Festbinden an der zweiten Leine (16; 105) erstrecken.

7. Block (100) mit einer Textilachse nach einem oder mehreren der vorhergehenden Ansprüche, wobei die äußere Umfangsnut (102) zwischen jeweiligen Flanken (106) der Umlenkrolle (101) angeordnet ist, auf denen jeweils eine jeweilige Innenseite (107), die der Nut (102) zugewandt ist, und eine Außenseite (108), die der Innenfläche (107) gegenüberliegt, definiert ist, wobei der Block (100) auf zumindest einer der Flächen (107, 108) die erste Verbindungseinrichtung (110) aufweist und auf dem Teilverschlusselement (109) auf derselben Fläche der Umlenkrolle die zweite Verbindungseinrichtung (111) aufweist, sodass, wenn die ersten und zweiten Verbindungseinrichtungen (110, 111) miteinander verbunden sind, das Verschlusselement (109) radial an der Umlenkrolle (101) befestigt ist, die Umlenkrolle (2; 101) und das Verschlusselement (10; 109) jedoch frei gegeneinander drehbar sind, wobei die erste Verbindungseinrichtung (110) an der Innenseite (107) der Flanken (106) der Umlenkrolle ausgebildet ist.

8. Block (100) mit einer Textilachse nach einem oder mehreren der Ansprüche 1 bis 6, wobei die äußere Umfangsnut (102) zwischen jeweiligen Flanken (106) der Umlenkrolle (101) angeordnet ist, auf denen jeweils eine jeweilige Innenseite (107), die der Nut (102) zugewandt ist, und eine Außenseite (108), die der Innenseite (107) gegenüberliegt, definiert ist, wobei der Block auf zumindest einer der Flächen (107, 108) die erste Verbindungseinrichtung (110) aufweist und auf dem Teilverschlusselement (109) auf derselben Fläche der Umlenkrolle die zweite Verbindungseinrichtung (111) aufweist, sodass, wenn die ersten und zweiten Verbindungseinrichtungen (110, 111) miteinander verbunden sind, das Verschlusselement (109) radial an der Umlenkrolle (101) befestigt ist, die Umlenkrolle (101) und das Verschlusselement (109) jedoch frei gegeneinander drehbar sind, wobei die erste Verbindungseinrichtung (110) auf der Außenseite (108) der Flanken (106) der Umlenkrolle ausgebildet sind.

9. Block (100) mit einer Textilachse nach Anspruch 8, wobei das Teilverschlusselement (109) eine dazwischenliegende Verengung (117) aufweist, die an in Umfangsrichtung gegenüberliegenden Seiten in Bezug auf die Verengung (117) jeweils einen Läufer (114) begrenzt, der mittels einer Gleitverbindung zwischen den ersten und zweiten Verbindungseinrichtungen (110, 111) mit der Umlenkrolle (101) in Eingriff steht.

10. Block (1; 100) mit einer Textilachse nach einem oder mehreren der vorhergehenden Ansprüche, wobei die erste Verbindungseinrichtung (9; 110) in Form von Aussparungen ausgebildet ist und die zweite Verbindungseinrichtung (12; 111) in Form von Vorsprüngen ausgebildet ist, die in die Aussparungen einschnappbar eingreifen können, oder umgekehrt.

11. Block (1; 100) mit einer Textilachse nach Anspruch 10, wobei die Ausnehmungen in Form einer zweiten Ringnut ausgebildet sind, die in Umfangsrichtung in der Nähe eines äußeren Umfangsrands der entsprechenden Flanke (6, 7; 106) der Umlenkrolle (2; 101) ausgebildet ist

12. Block (1; 100) mit einer Textilachse nach einem oder mehreren der vorhergehenden Ansprüche, wobei ein erster Abstand (W1), der in axialer Richtung die Außenflächen (3, 4; 108) der Flanken (6, 7; 106) der Umlenkrolle (2; 101) trennt, und ein zweiter Abstand (W2) definiert sind, der in axialer Richtung die entsprechenden Flanken des Teilverschlusselements (10; 109) zumindest in einem Bereich davon trennt, welcher der zweiten Leine (16; 105) zugewandt ist, wobei der erste Abstand (W1) größer als der zweite Abstand ist.

13. Block (1; 100) mit einer Textilachse nach Anspruch 12, wobei die zweite Leine (15; 105) aus einem Material mit einem Reibungskoeffizienten in Bezug auf ein Material der Umlenkrolle (2; 101) hergestellt ist, der kleiner als der Reibungskoeffizient eines Materials des Teilverschlusselements (10; 109) in Bezug auf ein Material der Umlenkrolle (2; 101) ist.

14. Block (1; 100) mit einer Textilachse nach Anspruch 12 oder 13, wobei die Umlenkrolle (2; 101) aus einem Metallmaterial oder einem Verbundmaterial hergestellt ist, die zweite Leine (15; 105) aus einem Textilmaterial hergestellt ist, und das Teilverschlusselement (10; 109) aus einem Kunststoffmaterial hergestellt ist.

## Revendications

1. Bloc (1 ; 100) comportant un axe textile comprenant une poulie (2 ; 101) sans palier avec deux faces (3, 4 ; 108) opposées entre lesquelles se trouvent au moins une gorge (5 ; 102) périphérique externe pour un cordage (8) à retourner et un passage central (20 ; 103) pour un second cordage (16 ; 105) servant d'axe textile du bloc (1 ; 100), un élément de fermeture (10 ; 109) partielle étant associé à la poulie (2 ; 101) de manière à recouvrir un secteur angulaire de la gorge (5 ; 102), **caractérisé en ce qu'**il comprend sur la poulie (2 ; 101), le long d'au moins un côté (6, 7 ; 106) de la gorge (5 ; 102) périphérique adjacent à la face (3 ; 4 ; 108) correspondante de premiers moyens d'accouplement (9 ; 110) et il comprend sur l'élément de fermeture (10 ; 109), au niveau du même côté (6, 7 ; 106) de la poulie (2 ; 101), de seconds moyens d'accouplement (12 ; 111) de telle sorte que, lorsque les premiers et seconds moyens d'accouplement (9, 12 ; 110, 111) sont accouplés les uns aux autres, l'élément de fermeture (10 ; 109) est maintenu radialement à la gorge (5 ; 102), mais la poulie (2 ; 101) et l'élément de fermeture (10 ; 109) sont libres en termes de rotation relative.

2. Bloc (1 ; 100) comportant un axe textile selon la revendication 1, dans lequel de premiers et seconds moyens d'accouplement (9, 12 ; 110, 111) sont prévus à la fois sur les côtés (6, 7 ; 106) juxtaposés de la gorge (5 ; 102) et sur les deux côtés correspondants de l'élément de fermeture (10 ; 109) partielle.

3. Bloc (1) comportant un axe textile selon la revendication 1 ou 2, dans lequel l'élément de fermeture (10) partielle est au moins partiellement inséré dans la gorge (5).

4. Bloc (1) comportant un axe textile selon la revendication 1, 2 ou 3, dans lequel l'élément de fermeture (10) partielle peut être inséré de manière amovible entre les côtés juxtaposés de la gorge (5) avec un accouplement qui est assuré par la forme de celui-ci, de préférence dans lequel l'élément de fermeture (10) partielle peut être inséré entre les côtés juxtaposés de la gorge (5) avec un accouplement qui est assuré par la forme de celui-ci au moyen d'une déformation élastique de l'élément de fermeture (10) partielle, de manière davantage préférée dans lequel l'élément de fermeture (10) partielle est fabriqué à partir d'un matériau plastique déformable élastiquement pour permettre à l'élément de fermeture (10) partielle d'être inséré entre les côtés juxtaposés de la gorge (5) avec un accouplement qui est assuré par la forme de celui-ci.

5. Bloc (1 ; 100) comportant un axe textile selon l'une ou plusieurs des revendications précédentes, dans lequel l'élément de fermeture (10 ; 109) partielle s'étend sur un secteur de la poulie (2 ; 101) avec un angle (A1) compris entre 50° et 180° ou sur un pourcentage du développement circulaire de la gorge (5 ; 102) compris entre 15 et 50 %.

6. Bloc (1 ; 100) comportant un axe textile selon l'une ou plusieurs des revendications précédentes, dans lequel l'élément de fermeture (10 ; 109) partielle est maintenu au second cordage (16 ; 105), l'élément de fermeture (10 ; 109) partielle étant de préférence maintenu au second cordage (16 ; 105) en étant attaché, l'élément de fermeture (10 ; 109) partielle étant de manière davantage préférée pourvu d'une saillie d'extrados (13) à travers laquelle des trous traversants (14 ; 118) s'étendent pour être attaché au second cordage (16 ; 105).

7. Bloc (100) comportant un axe textile selon l'une ou plusieurs des revendications précédentes, la gorge (102) périphérique externe se trouvant entre des côtés (106) respectifs de la poulie (101), sur chacun desquels est définie une face (107) interne respective qui fait face à la gorge (102) et une face (108) externe opposée à la face (107) interne, dans lequel le bloc (100) comprend, sur au moins l'une des faces (107, 108), de premiers moyens d'accouplement (110) et il comprend sur l'élément de fermeture (109) partielle, au niveau de la même face de la poulie, de seconds moyens d'accouplement (111) de sorte que, lorsque les premiers et seconds moyens d'accouplement (110, 111) sont accouplés les uns ou autres, l'élément de fermeture (109) est maintenu radialement à la poulie (101), mais la poulie (101) et l'élément de fermeture (109) sont libres en termes de rotation relative, les premiers moyens d'accouplement (100) étant formés sur la face (107) interne des côtés (106) de la poulie.

8. Bloc (100) comportant un axe textile selon l'une ou plusieurs des revendications 1 à 6, la gorge (102) périphérique externe se trouvant entre des côtés (106) respectifs de la poulie (101), sur chacun desquels est définie une face (107) interne respective qui fait face à la gorge (102) et une face (108) externe opposée à la face (107) interne, dans lequel le bloc comprend, sur au moins l'une des faces (107, 108), de premiers moyens d'accouplement (110) et il comprend sur l'élément de fermeture (109) partielle, au niveau de la même face de la poulie, de seconds moyens d'accouplement (111) de telle sorte que, lorsque les premiers et les seconds moyens d'accouplement (110, 111) sont accouplés les uns aux autres, l'élément de fermeture (109) est maintenu radialement à la poulie (101), mais la poulie (101) et l'élément de fermeture (109) sont libres en termes de rotation relative, les premiers moyens d'accouplement (110) étant formés sur la face (108) externe des côtés (106) de la poulie.

9. Bloc (100) comportant un axe textile selon la revendication 8, dans lequel l'élément de fermeture (109) partielle comporte un étranglement (117) intermédiaire qui délimite, à des côtés opposés de manière circonférentielle par rapport à l'étranglement (117), un patin (114) respectif qui est mis en prise avec la poulie (101) au moyen d'une liaison coulissante entre les premiers et les seconds moyens d'accouplement (110, 111).

10. Bloc (1 ; 100) comportant un axe textile selon l'une ou plusieurs des revendications précédentes, dans lequel les premiers moyens d'accouplement (9 ; 110) sont fabriqués sous forme d'évidements et les seconds moyens d'accouplement (12; 111) sont fabriqués sous forme de saillies qui peuvent se mettre en prise avec les évidements par encliquetage, ou vice versa.

11. Bloc (1 ; 100) comportant un axe textile selon la revendication 10, dans lequel les évidements sont fabriqués sous forme d'une seconde gorge annulaire qui se développe de manière circonférentielle à proximité d'un bord périphérique externe du côté (6, 7 ; 106) correspondant de la poulie (2 ; 101).

12. Bloc (1 ; 100) comportant un axe textile selon l'une ou plusieurs des revendications précédentes, dans lequel sont définies une première distance (W1) qui sépare dans une direction axiale les faces (3, 4 ; 108) externes des côtés (6, 7 ; 106) de la poulie (2 ; 101), et une seconde distance (W2) qui sépare dans une direction axiale les côtés correspondants de l'élément de fermeture (10 ; 109) partielle au moins dans une zone de ceux-ci faisant face au second cordage (16 ; 105), la première distance (W1) étant supérieure à la seconde distance (W2) de manière à empêcher que l'élément de fermeture (10 ; 109) partielle ne soit comprimé au niveau des côtés (6, 7 ; 106) de la poulie en raison de la tension du second cordage (16 ; 105) lorsque le bloc (1 ; 100) est sous charge.

13. Bloc (1 ; 100) comportant un axe textile selon la revendication 12, dans lequel le second cordage (15 ; 105) est fabriqué à partir d'un matériau ayant un coefficient de frottement par rapport à un matériau de la poulie (2 ; 101) qui est inférieur au coefficient de frottement d'un matériau de l'élément de fermeture (10 ; 109) partielle par rapport au matériau de la poulie (2 ; 101).

14. Bloc (1 ; 100) comportant un axe textile selon la revendication 12 ou 13, dans lequel la poulie (2 ; 101) est fabriquée à partir d'un matériau métallique ou d'un matériau composite, le second cordage (15 ; 105) est fabriqué à partir d'un matériau textile et l'élément de fermeture (10 ; 109) partielle est fabriqué à partir d'un matériau plastique.
